# FASCICULE DE BREVET EUROPEEN

(11) **EP 0 877 155 B1**
(45) Date de publication et mention de la délivrance du brevet: **17.07.2002**
(21) Numéro de dépôt: 98401107.2
(22) Date de dépôt: 07.05.1998
(51) Int. Cl.: F02C 7/042

(54) **Système d'admission d'air dans une veine de turbomachine**
Lufteinlass für eine Turbomaschine
Supplementary air inlet openings for gas turbine in supersonic aeroplane

(30) Priorité: 07.05.1997 FR 9705619
(43) Date de publication de la demande: 11.11.1998
(73) Titulaire: Snecma Moteurs, 75015 Paris (FR)
(72) Inventeur: Bardagi, Thierry Pascal, 91000 Evry (FR); Jourdain, Gérard Ernest André, 91250 Saintry (FR)

(56) Documents cités:
- DE-A- 1 944 472
- DE-A- 3 942 323
- FR-A- 966 975
- FR-A- 2 476 743
- US-A- 3 503 211
- US-A- 3 915 413
- US-A- 4 022 948

## Description

L'invention concerne un système d'admission d'air dans une turbomachine.

Certains aéronefs, supersoniques en particulier, sont équipés de turbomachines spéciales à double alimentation d'air : l'alimentation ordinaire, qui s'effectue par l'avant de la veine et qui est seule en activité pendant le vol à vitesse stable, doit être complétée par une alimentation d'air secondaire au décollage et aux montées en régime de l'aéronef. Cette alimentation d'air secondaire est produite en dégageant des ouvertures de l'enveloppe (appelée "nacelle") qui entoure la veine, pour permettre donc à de l'air environnant d'entrer dans la veine par le côté. Des portes mobiles, qui couvrent les ouvertures quand l'alimentation ordinaire suffit, sont déplacées pour cela.

Plusieurs genres de portes ont été conçus. On peut citer d'abord les portes appelées "rampes" qui coulissent sur des glissières le long de la nacelle pour dégager les ouvertures, mais leur désavantage essentiel est qu'elles ne sont pas capables de guider l'air, qui circule ainsi sur la nacelle et devant les ouvertures sans être incité à les traverser : l'entrée d'air dans la veine est peu importante à moins de donner une grande surface aux portes, qui doivent alors être déplacées sur une plus grande longueur ; le dispositif devient encombrant et la machine plus bruyante, car les sons se propagent plus facilement à travers ces portes, qui vibrent facilement.

Une autre conception connue consiste à remplacer les portes coulissantes par des portes rotatives appelées "écopes" et articulées à la nacelle par leur bord arrière. Ces portes s'ouvrent vers l'extérieur de la veine et présentent alors une obliquité qui leur permet d'arrêter une grande quantité d'air et de la dévier dans les ouvertures de la nacelle, qui s'étendent devant elles et à leur pied, et dans la veine. Leur inconvénient est qu'elles produisent une force de traînée aérodynamique importante qui réduit les performances de la machine, notamment aux vitesses élevées. Il faut alors rentrer partiellement les écopes, ce qui diminue la surface d'ouverture par laquelle l'air entre dans la nacelle et l'efficacité du guidage. Cette conception devient donc insuffisante.

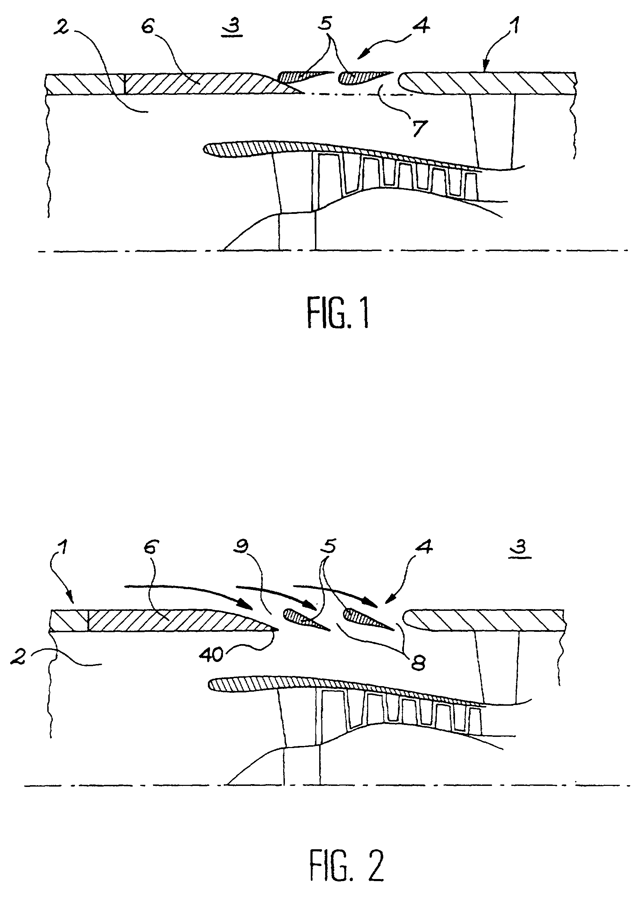

Enfin, on a aussi proposé un système comprenant des "persiennes", c'est-à-dire des portes rotatives différentes des précédentes, orientées obliquement vers l'intérieur de la veine en position d'ouverture et qui ne s'étendent pas hors de la nacelle : elles ne créent donc pas de force de traînée appréciable mais présentent plusieurs inconvénients, qui vont être évoqués à l'aide des figures 1 et 2 qui permettent de comprendre ce système d'entrée d'air et ses caractéristiques. La nacelle 1 isolant la veine 2 de l'extérieur 3 est interrompue sur une partie de sa surface et sa continuité est rétablie par le système d'admission d'air 4. Les persiennes portent la référence 5 et une rampe coulissante, située à l'avant des persiennes 5, la référence 6. Les persiennes 5 se présentent sous forme d'ailettes sensiblement plus minces que la nacelle 1 et qui s'étendent de manière à prolonger la face externe de celle-ci en se touchant par les extrémités dans la position de fermeture représentée sur cette figure ; la rampe 6 occupe alors sa position arrière extrême. Il n'en va plus de même à la situation de la figure 2, où les persiennes 5 ont basculé autour de leur axe de rotation, situé vers l'avant, et sont alors inclinées vers la veine 2, ce qui délimite des passages 8 derrière elles et entre elles. De plus, la rampe 6 a avancé pour ouvrir un autre passage 9 devant la persienne 5 la plus proche, et comme le bord 40 de la rampe 6 s'effile vers l'arrière, sa face externe fuyant vers la veine 2, l'air extérieur est encore guidé vers celle-ci. La position de la figure 2 est utilisée pour des vitesses faibles de l'aéronef. Quand la vitesse devient plus élevée, la résistance des persiennes 5 assez minces et ordinairement assez longues sur la circonférence de la nacelle 1 devient problématique, ce qui impose de les refermer en leur faisant reprendre la position de la figure 1, et on rétablit une section de passage d'air acceptable en avançant encore la rampe 2.

On voit que le fonctionnement de ce dispositif, où l'addition de la rampe 6 est nécessaire, est compliqué et impose d'utiliser un mécanisme de commande particulier. De plus, la renonciation au guidage d'air qu'offraient les écopes externes à la veine rend nécessaire l'accroissement de la surface d'ouverture pour favoriser un débit suffisant de passage d'air : on est donc amené à utiliser plusieurs persiennes 5 de grande extension angulaire (78° dans une conception particulière), ce qui les rend fragiles et leur donne un bombement important, qui fait que leur rotation s'accompagne de déplacements de translation notables, surtout au milieu. On est donc conduit à laisser des jeux entre les persiennes 5 à toutes les positions, même à la position de fermeture de la figure 1, pour éviter les coincements à la rotation, avec la conséquence que le rendement et la discrétion acoustique de la machine sont compromis. Enfin, les persiennes 5 doivent être minces, ce qui interdit de respecter la continuité de profil de la nacelle 1 : la figure 1 montre que la veine 3 est formée avec une poche 7 devant elles ; l'écoulement d'air ne peut plus y être régulier, même quand les persiennes 5 sont fermées.

On connaît en outre par US-A-3 915 413 un système d'entrée d'air pour turbomachine comportant des entrées d'air secondaire munies chacune d'un panneau extérieur rotatif et d'un panneau intérieur rotatif entre lesquels est ménagé un passage d'air.

L'invention a pour objet d'échapper autant que possible aux inconvénients de ces différents systèmes tout en retenant certains de leurs avantages. Elle permet en particulier d'obtenir un guidage efficace de l'air vers la veine quand le système d'admission d'air est ouvert tout en rétablissant un profil interne et externe lisse de la nacelle quand il est fermé. Ensuite, ce système d'admission est de constitution et de commande simples et il n'est pas fragile. Enfin, un bon détournement de l'air vers la veine ne s'accompagne pas d'une force de traînée élevée.

Pour résumer, cette invention concerne un système d'admission d'air dans une veine de turbomachine par des ouvertures d'une enveloppe latérale de la veine pouvant être refermées par des portes mobiles comprenant des portes rotatives s'ouvrant hors de la veine et articulées à l'enveloppe par des charnières arrière, caractérisé en ce que les portes comprennent aussi des portes coulissant sur la nacelle, situées en avant des portes rotatives, reliées aux portes rotatives par des moyens de liaison mécanique et pourvues de bords arrière inclinés vers la veine et couverts par les portes rotatives quand les ouvertures sont refermées ; avantageusement, les moyens de liaison mécanique consistent en des bras dépendant des portes coulissantes, encadrant les portes rotatives et portant des rainures inclinées sur des faces internes, dans lesquelles glissent des galets montés sur des côtés des portes rotatives.

Les portes rotatives, analogues aux écopes s'ouvrant vers l'extérieur l'art antérieur, ne semblent pas avoir été auparavant combinées à des rampes coulissantes. Cette combinaison permet de maintenir une entrée d'air suffisante aux vitesses élevées de l'aéronef : il est en effet possible de refermer à demi les écopes et de réduire ainsi leur force de traînée sans réduire le débit d'air introduit dans la veine à condition d'avancer davantage la rampe ; le guidage moins important des portes est donc compensé par un accroissement de l'ouverture. De plus, ce système se prête bien à une commande simple et simultanée des écopes et des rampes, contraitement à la conception combinée des figures 1 et 2 où la relation entre les déplacements des persiennes et de la rampe était complexe.

L'invention sera mieux comprise à l'aide des figures suivantes, qui sont annexées à titre illustratif et non limitatif :
- les figures 1 et 2, déjà décrites, illustrent un système d'admission d'air de l'art antérieur en position de fermeture et d'ouverture ;
- la figure 3 illustre le système d'admission d'air conforme à l'invention en position de fermeture ;
- la figure 4 illustre un détail de construction ;
- la figure 5 illustre le système d'admission d'air à l'état d'ouverture ;
- la figure 6 représente une rampe isolée ;
- la figure 7 représente le mécanisme de connexion d'une rampe à une porte ;
- les figures 8 et 9 représentent le mécanisme de connexion d'une rampe à une porte dans une autre direction et suivant deux états différents ;
- et la figure 10 est une vue plus générale de la machine.

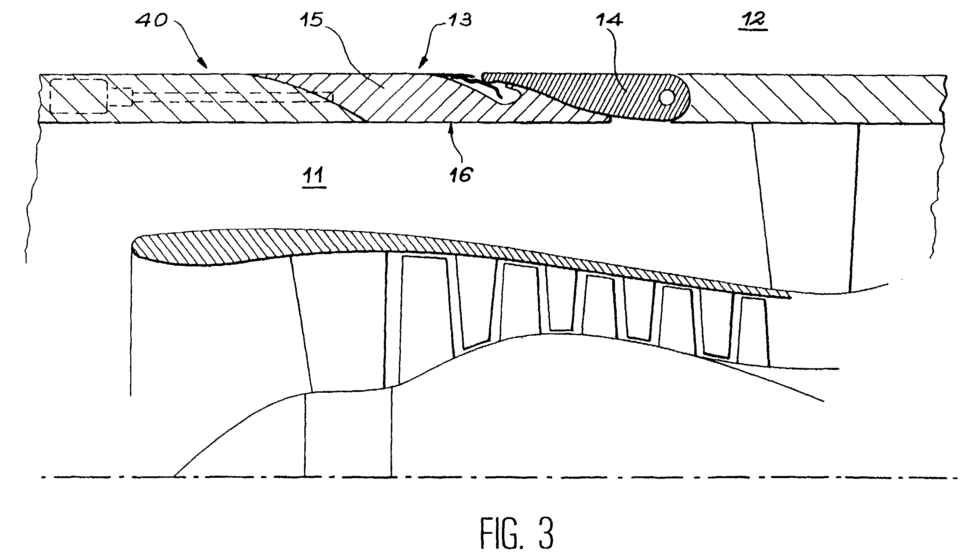

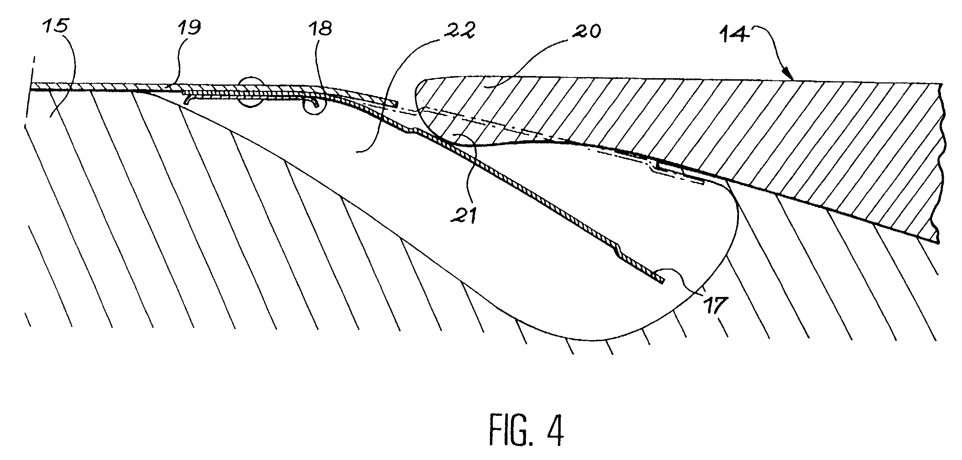

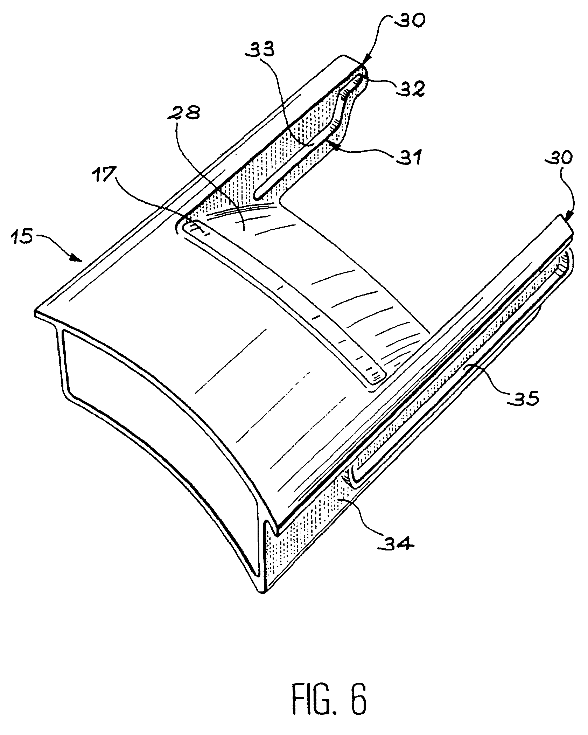

La description portera désormais sur les figures 3 à 9, dans cet ordre. La nacelle porte la référence 10 avec l'invention, la veine d'écoulement des gaz la référence 11 et l'extérieur la référence 12. Le système d'admission d'air 13 est composé d'écopes (portes rotatives) 14 et de rampes (portes coulissantes) 15 en avant des précédentes, qui possèdent l'épaisseur de la nacelle 10 à leurs portions opposées et qui s'effilent toutes deux à des portions de jonction, qui sont superposées à l'endroit d'une région de raccordement 16 obtenue à l'état fermé illustré à la figure 3, où les écopes 14 s'effilent en fuyant vers l'extérieur 12 et les rampes 15 en fuyant vers la veine 11 ; mais comme la surface extérieure des écopes 14 reste droite jusqu'à l'extrémité, ce qui permet de préserver l'aspect lisse de la nacelle à l'extérieur 12, et que les rampes 15 présentent de leur côté une face interne droite qui préserve l'aspect lisse de la nacelle 10 devant la veine 11, aucun obstacle à l'écoulement des gaz n'est crée. Bien que la superposition des pièces à la région de raccordement 16 soit bonne, on a prévu un système d'étanchéité illustré en détail à la figure 4 et qui consiste en une languette élastique 17 dont le liseré avant 18 est riveté à une plaquette 19 solidaire de la rampe 15 et dont la partie libre fléchit sous l'appui du bord d'attaque 20 de l'écope 14. Comme la plaquette 19 s'étend presque jusqu'au bord d'attaque 20, il ne subsiste qu'un mince interstice entre eux, qui de plus est bouché par le joint 17. On remarque en passant que le bord d'attaque 20 n'est pas effilé comme il est habituel, avec un arrondi à rayon constant de petite valeur à l'extrémité, mais qu'il présente au contraire une section bulbeuse, avec une proéminence 21 dirigée vers la veine 11 (et contre laquelle repose le joint 17), et que cette proéminence 21 a un rayon constant sur environ un quart de cercle dirigé vers la veine 11 et vers l'avant, et qui s'interrompt pratiquement à angle vif en se raccordant à la face externe de l'écope 14. Cette construction permet une admission plus efficace de l'air, qui s'écoulera le long de la proéminence 21 avec des décollements de couche limite beaucoup plus réduits avec la forme habituelle du bord d'attaque des portes. La porte 15 et l'écope 14 sont sensiblement jointives dans la position de fermeture du système d'admission, sauf devant la proéminence 21 où la porte 15 dessine une cavité 22 dans laquelle le joint 17 est logé.

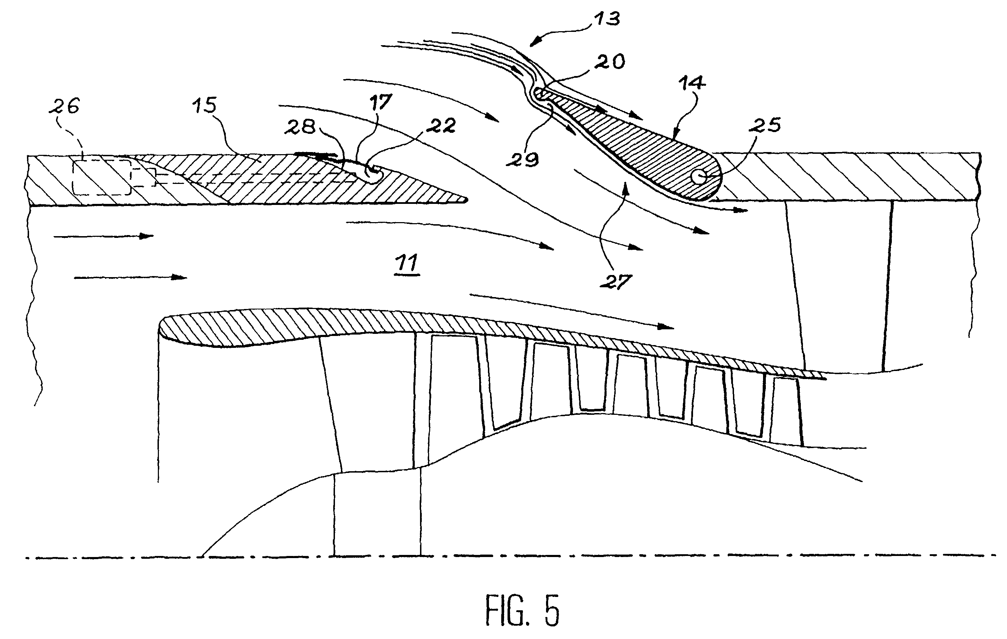

La position d'ouverture du système d'admission d'air 13 a été représentée à la figure 5 : les écopes 14 ont pivoté autour d'une charnière arrière 25 et les rampes 15 ont coulissé vers l'avant, entraînées par un moteur linéaire 26 ou toute autre système équivalent. La conjonction de ces mouvements a produit une ouverture 27 de surface assez grande vers la veine 11, et les surfaces fuyantes des écopes et des rampes 14 et 15, toutes inclinées vers la veine 11 en se dirigeant vers l'arrière, favorisent l'admission de l'air. Comme on l'a déjà mentionné, on diminue progressivement l'angle d'ouverture des écopes 14 quand la vitesse de l'aéronef augmente tout en manoeuvrant plus les rampes 15, afin de régler le débit d'air. On a aussi représenté, par souci explicatif, une zone 28 située sous le bord d'attaque 20 des écopes 14 et dans laquelle aucun écoulement n'est produit à cause des décollements de la couche limite à cet endroit. Les déplacements des rampes 15 nécessaires sont beaucoup plus réduits qu'avec un bord d'attaque qui serait dépourvu de la proéminence 21. Enfin, le joint 17 s'est redressé et couvre entièrement la cavité 22, ce qui assure un profil extérieur à la porte 15.

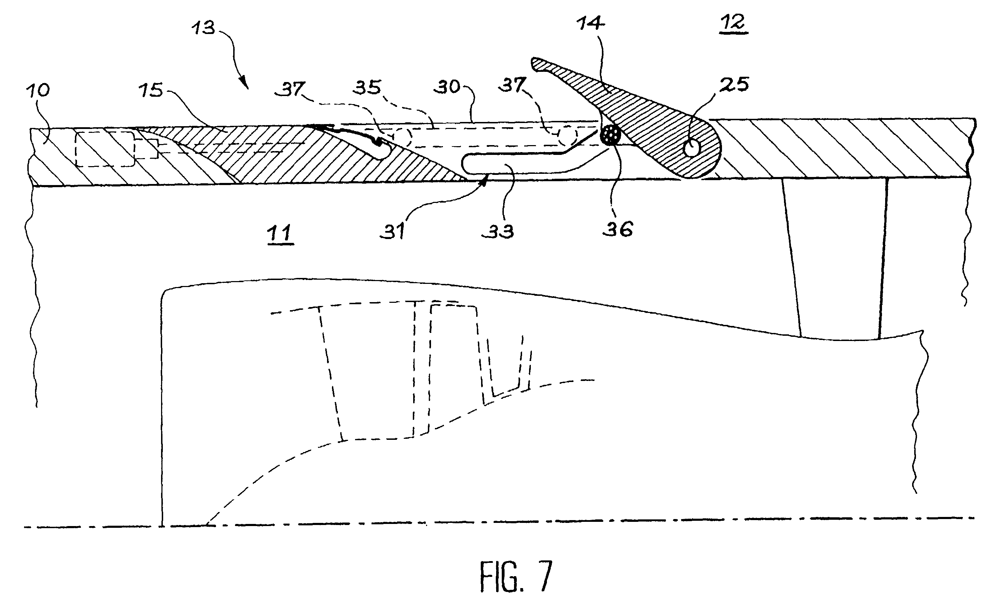

La synchronisation des mouvements des portes 14 et des rampes 15 est réalisée grâce à des bras 30 situés sur ces dernières et qui viennent encadrer latéralement les écopes 14. Ils s'étendent en arrière de la zone 28 sur ses deux côtés, et sont entaillés par une rainure 31 sur leur face interne 32 dirigée vers l'écope 14 ; les rainures 31 sont obliques sur au moins une partie de leur longueur et présentent une partie ascendante 33 vers l'extrémité des bras 30. Leur face externe 34 est par ailleurs entaillée d'une rainure rectiligne 35. Si on sait que les portes 14 sont munies de galets 36 roulant dans les rainures 31, comme il est représenté à la figure 7, on s'aperçoit que le mouvement vers l'avant des rampes 15 produit une élévation des écopes 14 dès que les galets 36 atteignent les parties ascendantes 33 des rainures 31. D'autres galets 37, qui sont montés sur la nacelle 10, roulent dans les rainures 35 rectilignes de la face externe 34 et soutiennent donc la rampe 15.

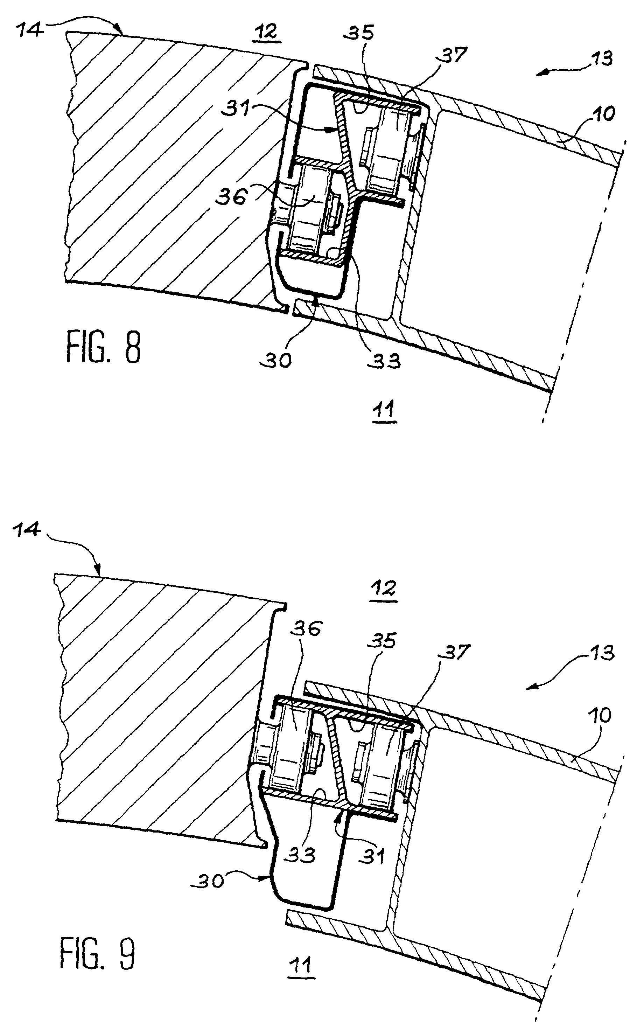

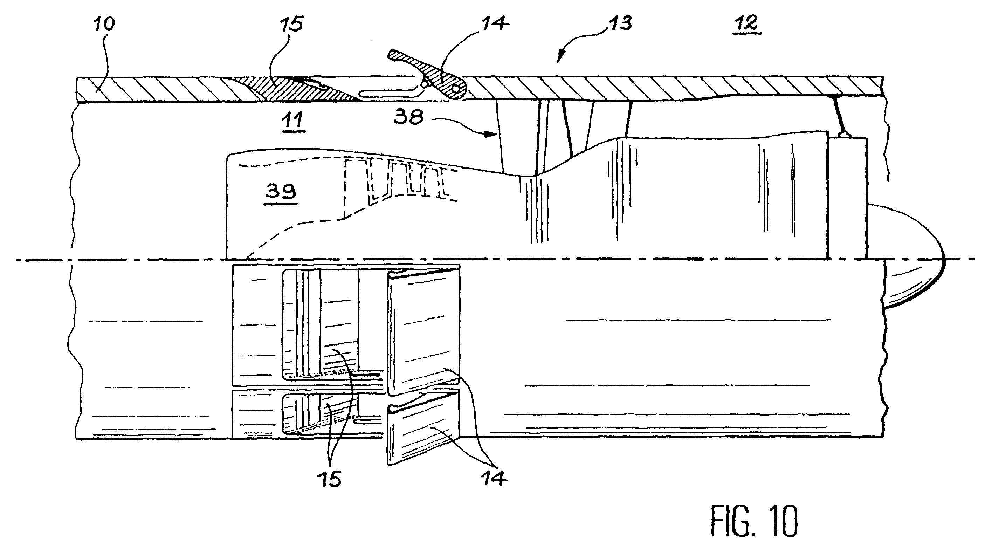

La figure 8 illustre la position relative des galets 36 et 37 à la fermeture des écopes 14, et la figure 9 leur position relative à l'ouverture des écopes 14. La figure 10 permet enfin de représenter plus complètement l'invention sur la nacelle 10 : le système décrit jusqu'ici est disposé sur des secteurs angulaires relativement brefs et à quelques exemplaires sur la circonférence de la nacelle 10. La veine 11 est une veine externe occupée par les pales d'une soufflante 38, qui s'étendent aussi dans une veine interne 39 entourée par la précédente et constituant la veine principale d'écoulement des gaz de la machine. Le système de l'invention apporte donc un débit d'air supplémentaire à la soufflante 38 quand il est ouvert, sans qu'on ait à augmenter le diamètre de la nacelle.

## Revendications

1. Turbomachine comprenant un système d'admission d'air dans une veine par des ouvertures d'une enveloppe latérale (10) de la veine pouvant être refermées par des portes rotatives (14) articulées à l'enveloppe par une charnière arrière (25) et tournant hors de la veine pour dégager les ouvertures, les portes rotatives s'effilant en fuyant vers l'extérieur, **caractérisée en ce que** les portes rotatives (14) sont associées à des portes (15) coulissant sur l'enveloppe vers l'avant, les portes coulissantes et rotatives possédent l'épaisseur de l'enveloppe sauf à des portions de jonction superposées à une région de raccordement (16) des portes, où les portes coulissantes s'effilent en fuyant vers l'intérieur, les portes coulissantes ayant une face intérieure droite et les portes rotatives une face extérieure droite.

2. Turbomachine selon la revendication 1, **caractérisé en ce que** les portes rotatives (14) ont un bord avant à proéminence (21) dirigée vers la veine, et les portes coulissantes possèdent une cavité (22) s'étendant devant la proéminence (21) quand les ouvertures sont fermées, ainsi qu'un joint d'étanchéité (17) en languette élastique à liseré avant fixé aux portes coulissantes et partie libre apte à fléchir sous la proéminence (21), et à couvrir la cavité (22) en se redressant quand les ouvertures sont dégagées.

3. Turbomachine selon l'une quelconque des revendications 1 ou 2, **caractérisé en ce qu'**il comprend des moyens de liaison mécanique entre les portes coulissantes et rotatives consistant en des bras dépendant des portes coulissantes (15), encadrant les portes rotatives (14) et portant des rainures (33) dans lesquelles glissent des galets (36) montés sur des côtés des portes rotatives (14), les rainures présentant une partie inclinée vers l'arrière et vers l'extérieur (33).

## Patentansprüche

1. Turbotriebwerk mit einem Lufteinlass in eine Strömungsbahn durch Öffnungen in einem seitlichen Mantel (10) der Strömungsbahn, die durch drehbare Klappen (14) verschlossen werden können, die durch ein hinteres Scharnier (25) an dem Mantel angelenkt sind und sich aus der Strömungsbahn herausdrehen, um die Öffnungen freizugeben, wobei die drehbaren Klappen sich verjüngen, indem sie nach außen spitz zulaufen,
**dadurch gekennzeichnet,**
**dass** die drehbaren Klappen (14) mit Klappen (15) verbunden sind, die nach vorne auf den Mantel verschoben werden, wobei die verschiebbaren und die drehbaren Klappen die gleiche Dicke wie der Mantel aufweisen, abgesehen von den übereinander liegenden Verbindungsabschnitten in einem Anschlussbereich (16) der Klappen, wo die verschiebbaren Klappen sich verjüngen, indem sie nach innen spitz zulaufen, wobei die verschiebbaren Klappen eine gerade Innenseite und die drehbaren Klappen eine gerade Außenseite haben.

2. Turbotriebwerk nach Anspruch 1,
**dadurch gekennzeichnet,**
**dass** die drehbaren Klappen (14) eine Vorderkante mit einer der Strömungsbahn zugewandten Erhebung (21) aufweisen, und die verschiebbaren Klappen eine Ausnehmung (22) aufweisen, die sich unter der Erhebung (21) befindet, wenn die Öffnungen verschlossen sind, sowie eine Dichtung (17) in Form einer federnden Leiste mit einer an den verschiebbaren Klappen befestigten vorderen Borte und einem freien Teil, der geeignet ist, sich unter der Erhebung (21) zu biegen und die Ausnehmung (22) abzudecken, indem er sich zurückstellt, wenn die Öffnungen freigegeben werden, aufweisen.

3. Turbotriebwerk nach einem der Ansprüche 1 oder 2,
**dadurch gekennzeichnet,**
**dass** es zwischen den verschiebbaren und den drehbaren Klappen mechanische Verbindungsmittel aufweist, die aus Armen bestehen, die von den verschiebbaren Klappen (15) abhängen, die drehbaren Klappen (14) umrahmen und Nuten (33) aufweisen, in denen Rollen (36) laufen, die an den Seiten der drehbaren Klappen (14) sitzen, wobei die Nuten (33) einen nach außen geneigten hinteren Abschnitt aufweisen.

## Claims

1. A turboengine comprising a system for intaking air into a flowpath through apertures in a lateral casing (10) of the flowpath, the apertures being closable by rotatable doors (14) which are articulated to the casing by a rear hinge (25) and rotate out of the flowpath to open the apertures, the rotatable doors (14) tapering towards the exterior, **characterised in that** the rotatable doors (14) are associated with doors (15) which are forwardly slidable on the casing, the sliding doors and the rotatable doors having the thickness of the casing except at meeting parts, which are superposed on one another at a meeting region (16) of the doors where the sliding doors taper towards the interior, the sliding doors having a straight internal face and the rotatable doors having a straight external face.

2. A turboengine according to claim 1, **characterised in that** the rotatable doors (14) have a front edge with a protuberance (21) directed towards the flowpath, and the sliding doors have a cavity (22), which extends in front of the protuberance (21) when the apertures are closed, a resilient leaf seal (17) with front edging secured to the sliding doors and a free part adapted to flex below the protuberance (21) and to cover the cavity (22) by straightening up when the apertures are opened.

3. A turboengine according to claim 1 or claim 2, **characterised in that** it comprises mechanical connecting means between the sliding doors and the rotatable doors in the form of arms which depend from the sliding doors (15), frame the rotatable doors (14), and are formed with grooves (33) in which rollers (36), disposed on sides of the rotatable doors (14), slide, the grooves having a rearwardly and outwardly inclined portion (33).
